# FASCICULE DE BREVET EUROPEEN

(11) **EP 3 144 222 B1**
(45) Date de publication et mention de la délivrance du brevet: **24.07.2019**
(21) Numéro de dépôt: 16184647.2
(22) Date de dépôt: 18.08.2016
(51) Int. Cl.: B64C 27/12, B64C 27/06, B64C 27/82, F16H 1/28, F16H 57/00

(54) **SYSTEME DE TRANSMISSION DE PUISSANCE ET AERONEF AYANT UNE VOILURE TOURNANTE**
ANTRIEBSSYSTEM UND DREHFLÜGELFLUGZEUG
POWER TRANSMISSION SYSTEM AND ROTARY-WING AIRCRAFT

(30) Priorité: 16.09.2015 FR 1501920
(43) Date de publication de la demande: 22.03.2017
(73) Titulaire: Airbus Helicopters, 13725 Marignane Cedex (FR)
(72) Inventeur: DE MEERSCHMAN, Olivier, 13140 Lambesc (FR); BARAIS, Olivier, 13090 Aix en Provence (FR)
(74) Mandataire: GPI & Associés

(56) Documents cités:
- FR-A1- 2 568 541
- FR-A1- 2 964 948
- US-A- 6 042 499
- US-A1- 2006 269 414

## Description

La présente invention concerne un système de transmission de puissance, ainsi qu'un aéronef ayant une voilure tournante et un tel système de transmission de puissance.

L'invention se situe donc dans le domaine des boîtes de transmission de puissance d'un giravion.

En particulier, un aéronef de type giravion comporte un rotor participant au moins partiellement à la sustentation de cet aéronef. Un hélicoptère peut ainsi comporter un rotor dit « rotor principal » qui participe à la sustentation et à la propulsion de cet hélicoptère, et un rotor dit « rotor arrière » qui participe au contrôle du mouvement en lacet de cet hélicoptère.

Un aéronef dénommé « aéronef hybride » par commodité peut comporter un rotor dit « rotor principal » qui participe à la sustentation et à la propulsion, ainsi qu'au moins un rotor latéral participant à la propulsion de cet aéronef hybride et au contrôle du mouvement en lacet de l'aéronef.

Pour mettre en rotation chaque rotor, un giravion est muni d'une installation motrice comportant au moins un moteur.

En outre, un système de transmission de puissance est interposé entre le ou les moteurs et chaque rotor pour mettre en rotation les rotors. Un système de transmission de puissance a notamment pour fonction d'entraîner le rotor à une faible vitesse de rotation comparée à la vitesse de rotation élevée des moteurs. A titre illustratif, un moteur de type turbomoteur possède un arbre de travail effectuant une rotation à une vitesse de l'ordre de plusieurs dizaines de milliers de tours par minute, le rotor principal effectuant une rotation à une vitesse comprise par exemple entre 250 et 450 tours par minute. A titre informatif, les rotors latéraux d'un aéronef hybride effectuent une rotation à une vitesse de l'ordre par exemple de 2000 tours par minute, un rotor arrière effectuant une rotation à une vitesse de l'ordre par exemple de 5000 tours par minute.

Ainsi, un hélicoptère peut être muni d'au moins deux moteurs. Chaque moteur met en mouvement une boîte de transmission de puissance principale du système de transmission de puissance, éventuellement via au moins une roue libre. Une telle boîte de transmission de puissance principale est connue sous l'acronyme « BTP ». La boîte de transmission de puissance principale entraîne alors en rotation le rotor principal.

Un système de transmission de puissance d'un hélicoptère de l'art antérieur présente un système d'entraînement mécanique d'entrée par moteur. Chaque système d'entraînement mécanique d'entrée est donc mis en mouvement par un moteur. Les systèmes d'entraînement mécanique d'entrée mettent en mouvement une roue de conjugaison. La roue de conjugaison met alors en mouvement une boîte de transmission de puissance. En particulier, la roue de conjugaison est solidaire en rotation d'un pignon de la boîte de transmission de puissance. Ce pignon entraîne alors en rotation une roue principale de la boîte de transmission de puissance. Cette roue principale met par suite en mouvement un mât rotor via au moins un étage épicycloïdal de réduction de vitesse de rotation. De plus, la roue de conjugaison met en mouvement la chaîne de transmission de puissance arrière.

Le document US 2911851 illustre une boîte de transmission de puissance apte à entraîner un rotor principal et une chaîne de transmission de puissance arrière.

Le document FR 2568541 décrit une architecture alternative. La boîte de transmission de puissance principale comprend un système d'entraînement mécanique d'entrée par moteur. Chaque système d'entraînement mécanique d'entrée est donc mis en mouvement par un moteur. Les systèmes d'entraînement mécanique d'entrée mettent en mouvement une roue de conjugaison qui met en mouvement la chaîne de transmission de puissance arrière. De plus, chaque système d'entraînement mécanique d'entrée engrène un premier étage de réduction de vitesse en prise sur une roue principale. Cette roue principale met en mouvement un mât rotor via un deuxième étage épicycloïdal de réduction de vitesse de rotation.

Un aéronef hybride peut être muni d'au moins deux moteurs. Selon un système de transmission connu, chaque moteur met en mouvement un pignon dit « premier pignon » par commodité. Chaque premier pignon met en mouvement un système d'entraînement mécanique d'entrée. Chaque système d'entraînement mécanique d'entrée est donc mis en mouvement par un moteur via un pignon d'entrée notamment. Les systèmes d'entraînement mécanique d'entrée mettent conjointement en mouvement une roue principale. Cette roue principale met alors en mouvement un mât rotor via au moins un étage épicycloïdal de réduction de vitesse de rotation.

De plus, chaque premier pignon met en mouvement une chaîne de transmission de puissance latérale. Chaque chaîne de transmission de puissance latérale peut s'avérer relativement complexe pour suivre une trajectoire non rectiligne afin d'atteindre un rotor latéral. Par exemple, une chaîne de transmission de puissance latérale peut comporter des moyens de renvoi angulaire présentant une masse non négligeable.

L'architecture d'un système de transmission de puissance d'un hélicoptère diffère donc de l'architecture d'un système de transmission de puissance d'un aéronef hybride. De fait, la boîte de transmission de puissance principale d'un hélicoptère diffère donc de la boîte de transmission de puissance principale d'un aéronef hybride.

Pour illustrer cet aspect, le site internet www.avxaircraft.com présente une planche dénommée « OH-58D/AVX conversion process ». Un procédé est schématisé par quatre dessins pour transformer un hélicoptère muni d'un rotor principal et d'un rotor arrière, en un aéronef muni de deux rotors principaux coaxiaux et de deux propulseurs carénés. Selon ce procédé, le système de transmission de puissance est changé lors de la transformation, chaque aéronef ayant son propre système de transmission de puissance.

Le document FR 2964948 se rapporte à un hélicoptère hybride pourvu d'au moins une hélice propulsive placée sur le côté du fuselage, par exemple deux hélices propulsives agencées de part et d'autre du fuselage sur des demi-ailes. Par ailleurs, l'hélicoptère hybride est équipé d'une chaîne cinématique intégrée permettant au moteur d'entraîner la voilure tournante et les hélices. Cette chaîne cinématique est munie d'une boîte de transmission de puissance principale en amont de chaque rotor de la voilure tournante. Les documents US 6042499 et US 2006/269414 sont aussi connus.

La présente invention a alors pour objet de proposer un système de transmission de puissance alternatif.

L'invention concerne donc un système de transmission de puissance destiné à un giravion. Le système de transmission de puissance est muni d'au moins un réducteur d'entrée de vitesse de rotation mettant en rotation un réducteur principal de vitesse de rotation, le réducteur principal de vitesse de rotation étant mécaniquement relié à mât rotor destiné à entraîner en rotation un rotor principal du giravion, le rotor principal participant au moins partiellement à la sustentation du giravion, chaque réducteur d'entrée de vitesse de rotation comprenant au moins un pignon d'entrée engrenant une roue d'entrée, chaque pignon d'entrée étant destiné à être entraîné par un moteur, le réducteur principal de vitesse de rotation comprenant un pignon principal par réducteur d'entrée de vitesse de rotation, le réducteur principal de vitesse de rotation comprenant une roue principale engrenée par chaque pignon principal, chaque pignon principal étant relié par un arbre de liaison à une roue d'entrée. Le système de transmission de puissance est muni d'une première chaîne de transmission de puissance additionnelle.

Par exemple, chaque pignon principal est relié par un arbre de liaison à une roue d'entrée en formant un ensemble à double pignons, éventuellement en forme de H. Un tel arbre de liaison peut comporte un ou plusieurs tronçons fixés l'un à l'autre.

Un pignon principal et une roue d'entrée peuvent être reliés uniquement par un unique arbre de liaison, et non pas par une roue libre par exemple. Le pignon principal et la roue d'entrée peuvent être fixés à deux zones d'extrémités de l'arbre de liaison. Alternativement, le pignon principal ainsi que l'arbre de liaison et la roue d'entrée peuvent être des parties constituantes d'une seule et même pièce mécanique.

Au moins une roue d'entrée est solidaire en rotation autour d'un axe de rotation de la roue d'entrée sur elle-même d'un moyen de connexion réversible destiné à pouvoir entraîner la première chaîne de transmission de puissance additionnelle reliée à un rotor additionnel dudit giravion, ladite chaîne de transmission de puissance additionnelle étant un organe optionnel pouvant ne pas être monté sur ledit système de transmission de puissance.

Le moyen de connexion réversible peut être directement solidarisé à l'ensemble à double pignons et par exemple à la roue d'entrée, et peut alors être porté par l'ensemble à double pignons. Par exemple, le moyen de connexion réversible et l'ensemble à double pignons sont deux parties d'une même pièce mécanique, ou le moyen de connexion réversible est directement fixé à l'ensemble à double pignons par des moyens usuel de type vissage et/ou soudage et/ou collage et/ou rivetage...

Par suite, le système de transmission de puissance peut être mis en mouvement par au moins un moteur. Indépendamment du nombre de moteur, chaque moteur génère la rotation d'un réducteur d'entrée de vitesse de rotation.

Dès lors, les réducteurs d'entrée de vitesse de rotation mettent conjointement en rotation la roue principale via des pignons principaux. Cette roue principale met en mouvement directement ou indirectement le mât rotor. Ce mât rotor entraîne finalement en rotation le rotor principal.

En outre, le système de transmission de puissance peut éventuellement entraîner au moins un rotor additionnel.

Une première chaîne de transmission de puissance additionnelle peut entraîner en rotation un rotor latéral participant à la propulsion du giravion ou un rotor de contrôle du mouvement en lacet du giravion.

En outre, le système de transmission de puissance est dimensionné en fonction d'au moins un pignon additionnel pouvant optionnellement être engrené par la roue principale. Chaque pignon additionnel peut aussi générer la rotation d'un rotor.

Selon une première utilisation, le système de transmission de puissance mécanique peut donc être agencé sur un aéronef hybride. Par exemple, deux rotors latéraux sont respectivement mis en mouvement par deux moyens de connexion réversibles.

La solidarisation directe d'une chaîne de transmission de puissance latérale à une roue d'entrée, contrairement à un système engrené par un pignon d'entrée selon l'art antérieur décrit précédemment, présente un avantage non négligeable. En effet, durant un vol d'avancement, un rotor latéral peut devenir moteur et tendre à entraîner le système de transmission de puissance. Selon l'art antérieur, ce mode de fonctionnement tend à dégrader les dents du pignon d'entrée notamment. L'invention peut permettre d'éviter ce phénomène en utilisant un moyen de connexion réversible robuste.

Selon une deuxième utilisation, le système de transmission mécanique peut être agencé sur un hélicoptère. Par exemple, deux réducteurs d'entrée de vitesse de rotation sont respectivement entraînés par deux moteurs. Les deux réducteurs d'entrée de vitesse de rotation entraînent la rotation d'un rotor principal via la roue principale.

De plus, un rotor arrière peut soit être entraîné par la roue principale selon une réalisation explicitée par la suite, soit éventuellement par les deux moteurs au travers d'une roue de conjugaison annexe.

Par conséquent, la demanderesse est allée à l'encontre de préjugés en définissant un système de transmission de puissance innovant permettant d'être agencé sur de multiples appareils. A l'inverse, les préjugés existants tendent à imposer la réalisation d'une boîte de transmission de puissance pour chaque type d'aéronef.

L'utilisation d'un système de transmission de puissance ayant des ensembles mécaniques identiques sur un hélicoptère et sur un aéronef hybride est d'autant plus innovante qu'un rotor latéral d'un aéronef hybride effectue une rotation à une vitesse sensiblement égale à la moitié de la vitesse de rotation d'un rotor arrière.

En allant à l'encontre de ces préjugés, l'invention permet donc d'obtenir un système de transmission à utilisation variable.

Le système de transmission de puissance peut de plus comporter une ou plusieurs des caractéristiques qui suivent.

Dès lors, le système de transmission de puissance peut comporter au moins un pignon additionnel en prise sur la roue principale pour entraîner une deuxième chaîne de transmission de puissance additionnelle destinée à un rotor annexe du giravion.

Le système de transmission de puissance peut comporter à demeure ou ponctuellement un pignon additionnel permettant si besoin de connecter une deuxième chaîne de transmission de puissance additionnelle destinée à un rotor arrière d'un hélicoptère ou à un rotor latéral d'un aéronef hybride.

Un tel pignon additionnel peut aussi mettre en mouvement des accessoires, tel qu'une pompe ou un alternateur par exemple. Le pignon additionnel peut être agencé sur tous les systèmes de transmission pour entraîner des accessoires et / ou une chaîne de transmission de puissance additionnelle destinée à un rotor de contrôle du mouvement en lacet d'un hélicoptère.

Par ailleurs, chaque arbre de liaison s'étendant selon un axe transversal de symétrie, la roue principale présentant un axe en élévation de symétrie, l'axe transversal présentant une première angulation avec l'axe en élévation, la roue principale présentant un premier nombre de dents, chaque pignon principal présentant un deuxième nombre de dents, le premier nombre de dents et le deuxième nombre de dents sont fonction :
- de la première angulation,
- d'une première vitesse de rotation à atteindre par ladite roue principale,
- d'une deuxième vitesse de rotation à atteindre par chaque pignon principal,
- d'un troisième nombre de dents d'un pignon additionnel susceptible d'être en prise sur la roue principale pour entraîner une deuxième chaîne de transmission de puissance additionnelle destinée à un rotor de contrôle du mouvement en lacet du giravion, le pignon additionnel étant un organe optionnel pouvant ne pas être monté sur le système de transmission de puissance,
- d'une deuxième angulation séparant ledit axe en élévation d'un axe de rotation dudit pignon additionnel.

Eventuellement, une troisième vitesse de rotation à atteindre par chaque pignon additionnel est aussi prise en compte.

Par suite, qu'un pignon additionnel soit présent ou non sur le système de transmission de puissance, ce pignon additionnel est pris en compte lors du dimensionnement de la roue principale et des pignons principaux. Un tel dimensionnement d'un système de transmission en fonction d'un équipement éventuellement absent n'est pas évident.

Par suite, chaque pignon additionnel peut le cas échéant être agencé sur le système de transmission de puissance.

En outre, la réalisation d'un tel système mécanique n'a rien d'évident en raison des angles formés entre les différents organes à respecter, et des vitesses de rotation à atteindre. Des angles prédéterminés sont à respecter pour éviter d'implémenter des renvois d'angles par nature lourds. Les connaissances de l'homme du métier tendent à indiquer qu'un tel système de transmission de puissance ne peut pas être obtenu en raison du nombre important de contraintes. La demanderesse s'est affranchie de ces préjugés pour réaliser un système de transmission de puissance viable malgré des contraintes non négligeables.

En particulier, ce dimensionnement peut paraître difficile voire impossible à atteindre en présence d'une première angulation et d'une deuxième angulation différentes et supérieures à 90 degrés.

Par ailleurs, le système de transmission de puissance peut comporter un réducteur secondaire de vitesse de rotation interposé entre la roue principale et le mât rotor. Le réducteur secondaire de vitesse de rotation est par exemple muni d'au moins un étage épicycloïdal de réduction de vitesse de rotation.

En outre, le système de transmission de puissance comprenant une boîte de transmission de puissance munie d'un carter, le réducteur d'entrée de vitesse de rotation et le réducteur principal de vitesse de rotation sont agencés dans le carter.

Le carter peut comprendre un moyen d'accès pour accéder à chaque moyen de connexion réversible. Le moyen d'accès peut par exemple prendre la forme d'une trappe obturée par un bouchon. De manière alternative, le carter peut comporter des sous-ensembles fixés les uns au autres de manière amovible.

Le cas échéant, le système de transmission de puissance comportant un pignon additionnel en prise sur la roue principale pour entraîner une deuxième chaîne de transmission de puissance additionnelle destinée à un rotor de contrôle du mouvement en lacet, le pignon additionnel est agencé dans le carter.

Le carter peut en outre comporter une trappe permettant à un opérateur d'agencer un pignon additionnel si nécessaire en fonction de l'utilisation du système de transmission de puissance.

Le pignon additionnel peut aussi être solidaire d'un arbre de sortie saillant en dehors du carter pour être apte à entraîner la chaîne de transmission de puissance additionnelle voire des accessoires.

En effet, le système de transmission de puissance peut comporter un module d'accessoires relié mécaniquement à l'arbre de sortie.

Par ailleurs, le système de transmission de puissance peut comporter au moins une chaîne d'entrée de transmission de puissance relié à un pignon d'entrée, la chaîne d'entrée de transmission de puissance étant destinée à être interposée entre un pignon d'entrée et un moteur, la chaîne d'entrée de transmission de puissance comprenant au moins un organe à choisir dans une liste comprenant une roue libre, un réducteur de vitesse de rotation, un multiplicateur de vitesse de rotation.

La chaîne d'entrée de transmission de puissance peut être positionnée partiellement dans le carter, un arbre de cette chaîne d'entrée de transmission de puissance saillant du carter pour être relié mécaniquement à un moteur.

Par ailleurs, le moyen de connexion réversible d'un réducteur d'entrée de vitesse de rotation peut comporter des cannelures solidaires en rotation d'une roue d'entrée, voire directement portées par la roue d'entrée.

Les cannelures représentent un organe mécanique robuste pouvant être aisément emmanché autour ou dans un arbre d'une première chaîne de transmission de puissance additionnelle.

De manière alternative ou complémentaire, le moyen de connexion réversible peut comporter des moyens de vissage aptes à solidariser une première chaîne de transmission de puissance à une roue d'entrée.

Par exemple, une roue d'entrée peut être solidarisée en rotation à un arbre ou à un organe tolérant des désalignements par des boulons ou équivalent.

Des connexions par clavette sont aussi envisageables.

Par ailleurs, selon un premier mode de réalisation, chaque première chaîne de transmission additionnelle est destinée à être reliée à un rotor additionnel prenant la forme d'un rotor latéral participant au moins partiellement à la propulsion du giravion.

Dès lors, lorsque le système de transmission de puissance comportant un pignon additionnel optionnel en prise sur la roue principale pour entraîner une deuxième chaîne de transmission de puissance additionnelle, la deuxième chaîne de transmission additionnelle est destinée à être reliée à un rotor annexe prenant la forme d'un rotor de contrôle du mouvement en lacet du giravion.

Selon un deuxième mode de réalisation, chaque première chaîne de transmission additionnelle est destinée à être reliée à un rotor additionnel prenant la forme d'un rotor de contrôle du mouvement en lacet, tel qu'un rotor arrière d'un hélicoptère.

Dès lors, lorsque le système de transmission de puissance comporte au moins un pignon additionnel optionnel en prise sur la roue principale pour entraîner une deuxième chaîne de transmission de puissance additionnelle, la deuxième chaîne de transmission de puissance additionnelle est destinée à être reliée à un rotor annexe prenant la forme d'un rotor latéral participant au moins partiellement à la propulsion du giravion.

Indépendamment du mode de réalisation, le système de transmission de puissance est dimensionné pour pouvoir être utilisé sur un hélicoptère ou un aéronef hybride.

Outre un système de transmission de puissance, l'invention vise un giravion muni d'un rotor dit « rotor principal » participant au moins partiellement à la sustentation du giravion, ce giravion comprenant au moins deux moteurs pour mettre en mouvement le rotor principal.

Ce giravion comporte alors un système de transmission de puissance selon l'invention du type décrit précédemment.

Par ailleurs, l'invention vise un procédé pour dimensionner un tel système de transmission de puissance.

Chaque arbre de liaison s'étendant selon un axe transversal de symétrie, ladite roue principale présentant un axe en élévation de symétrie, ledit axe transversal présentant une première angulation avec ledit axe en élévation, ladite roue principale présentant un premier nombre de dents, chaque pignon principal présentant un deuxième nombre de dents, le procédé comporte une étape de détermination durant laquelle le premier nombre de dents et le deuxième nombre de dents sont déterminés en fonction :
- de ladite première angulation,
- d'une première vitesse de rotation à atteindre par ladite roue principale,
- d'une deuxième vitesse de rotation à atteindre par chaque pignon principal,
- d'un troisième nombre de dents pour un pignon additionnel susceptible d'être en prise sur ladite roue principale pour entraîner une chaîne de transmission de puissance additionnelle destinée à un rotor de contrôle du mouvement en lacet d'un hélicoptère, ledit pignon additionnel étant un organe optionnel pouvant ne pas être monté sur ledit système de transmission de puissance,
- d'une deuxième angulation séparant ledit axe en élévation d'un axe de rotation dudit pignon additionnel.

Eventuellement, une troisième vitesse de rotation à atteindre par le pignon additionnel est aussi prise en compte.

Ce procédé présente la particularité de définir une roue principale et les pignons principaux en fonction notamment d'au moins un pignon additionnel susceptible de ne pas être agencé sur le système de transmission de puissance.

Eventuellement, ce procédé comporte les étapes suivantes :
- attribution d'une première valeur angulaire de consigne à respecter par ladite première angulation, et d'une deuxième valeur angulaire de consigne à respecter par ladite deuxième angulation,
- attribution d'une première valeur de vitesse de rotation de consigne à respecter à ladite roue principale, et d'une deuxième valeur de vitesse de rotation de consigne à respecter pour chaque pignon principal, et éventuellement d'une troisième valeur de vitesse de rotation de consigne à respecter par chaque pignon additionnel
- attribution d'une première valeur de dents au premier nombre de dents,
- attribution d'une deuxième valeur de dents au deuxième nombre de dents,
- attribution d'une troisième valeur de dents au troisième nombre de dents
- détermination d'une valeur dite «valeur de calcul résultante » en appliquant la première valeur de dents, la deuxième valeur de dents et la troisième valeur de dents en fonction de la deuxième valeur angulaire de consigne, et
- comparaison de ladite valeur de calcul résultante avec la première valeur angulaire de consigne,
- détermination d'une première vitesse de rotation de chaque pignon principal et éventuellement d'une deuxième vitesse de rotation du pignon additionnel en fonction de la première valeur de vitesse de rotation de consigne et desdites première valeur de dents, deuxième valeur de dents et troisième valeur de dents,
- comparaison de ladite première vitesse de rotation et de la deuxième valeur de vitesse de rotation de consigne.

Eventuellement, un opérateur peut comparer la deuxième vitesse de rotation et la troisième valeur de vitesse de rotation de consigne. Toutefois, la deuxième vitesse de rotation peut être libre pour laisser une liberté de dimensionnement.

Un opérateur peut définir des critères acceptation des comparaisons effectuées, tels que des plages de valeurs acceptables.

Par exemple, un opérateur fixe arbitrairement la première valeur de dents, la deuxième valeur de dents et la troisième valeur de dents. L'opérateur peut alors déterminer :
- si ladite valeur de calcul résultante est égale à la première valeur angulaire de consigne,
- si la première vitesse de rotation est égale à la deuxième valeur de vitesse de rotation de consigne, et
- si la deuxième vitesse de rotation est égale à la troisième valeur de vitesse de rotation de consigne.

Dans la négative, la première valeur de dents, la deuxième valeur de dents et la troisième valeur de dents ne répondent pas aux critères établis. L'opérateur réitère alors cette opération jusqu'à l'obtention d'un résultat acceptable.

Par exemple, le première valeur de dents, la deuxième valeur de dents et la troisième valeur de dents peuvent être respectivement égales à 87, 23 et 17 pour atteindre une première valeur angulaire de consigne égale à 100 degrés plus ou moins 1.5 degré, une deuxième valeur angulaire de consigne égale à 96 degrés, une première valeur de vitesse de rotation de consigne égale à 1200 tours par minute, une deuxième valeur de vitesse de rotation de consigne supérieure ou égale à 4500 tours par minute, une troisième valeur de vitesse de rotation de consigne égale à 6000 tours par minute plus ou moins 200 tours.

L'invention et ses avantages apparaîtront avec plus de détails dans le cadre de la description qui suit avec des exemples donnés à titre illustratif en référence aux figures annexées qui représentent :
- la figure 1, un schéma présentant un système de transmission de puissance selon l'invention,
- la figure 2, un schéma présentant un système de transmission de puissance selon l'invention utilisé dans une architecture d'hélicoptère,
- la figure 3, un schéma présentant un système de transmission de puissance muni d'un réducteur d'entrée de vitesse de rotation comprenant un moyen de connexion réversible saillant en dehors d'un carter,
- la figure 4, un schéma présentant un système de transmission de puissance muni d'un pignon additionnel relié à une boîte d'accessoires,
- la figure 5, un schéma présentant un système de transmission de puissance muni d'un pignon additionnel relié à une boîte d'accessoires et à un rotor de contrôle du mouvement en lacet d'un giravion,
- la figure 6, un schéma représentant un système de transmission de puissance selon l'invention utilisé dans une architecture d'aéronef hybride,
- la figure 7, un schéma illustrant un moyen de connexion réversible pourvu d'un moyen de vissage,
- la figure 8, un schéma représentant un système de transmission de puissance selon l'invention muni d'un moyen de connexion réversible destiné à l'entraînement d'un rotor de contrôle du mouvement en lacet, et
- la figure 9, un schéma illustrant le procédé selon l'invention.

Les éléments présents dans plusieurs figures distinctes sont affectés d'une seule et même référence.

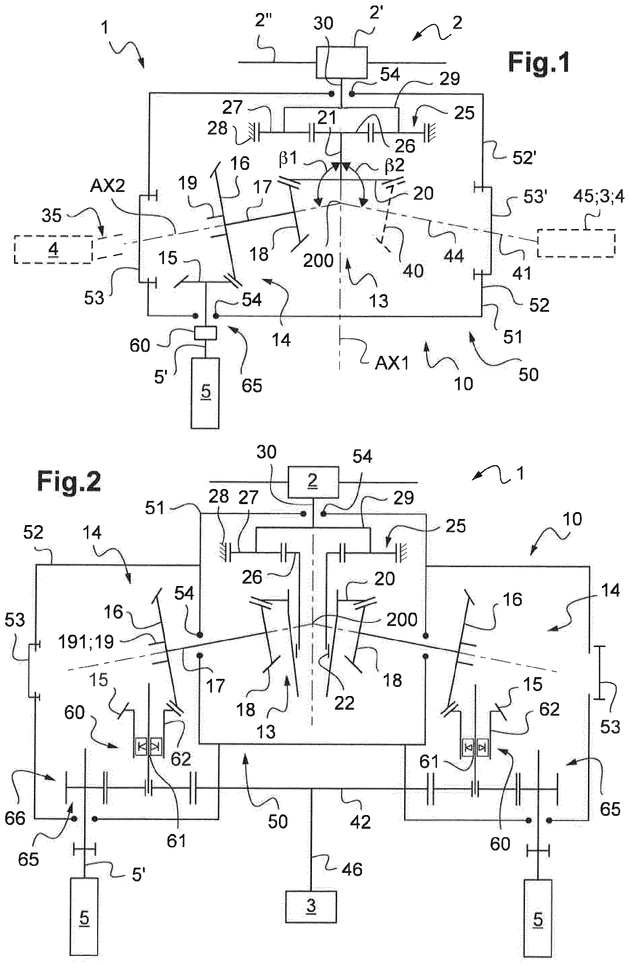

La figure 1 présente un système de transmission de puissance 10 selon l'invention susceptible d'être agencé sur un giravion 1 selon l'invention.

Ce système de transmission de puissance 10 a notamment pour fonction d'entraîner un rotor principal 2 participant à la sustentation voire à la propulsion de ce giravion 1. Par exemple, le rotor principal 2 comprend un moyeu 2' portant une pluralité de pales 2".

Le giravion 1 peut être un hélicoptère muni par exemple d'un rotor principal 2 et d'un rotor de contrôle du mouvement en lacet 3, ou un aéronef hybride pourvu d'un rotor principal 2 et d'au moins un rotor latéral 4.

Pour mettre en mouvement les rotors et indépendamment de la nature du giravion 1, ce giravion 1 possède une installation motrice. Cette installation motrice est munie d'au moins un moteur 5. Chaque moteur 5 est relié mécaniquement aux rotors par le système de transmission de puissance 10.

Le système de transmission de puissance 10 comprend un réducteur d'entrée de vitesse de rotation 14 par moteur. Chaque réducteur d'entrée de vitesse de rotation 14 communique donc mécaniquement avec au un moins moteur 5.

Chaque réducteur d'entrée de vitesse de rotation 14 est dans ce contexte pourvu d'un pignon dit « pignon d'entrée 15 » par commodité qui est mis en mouvement directement ou indirectement par un moteur 5. Par exemple, un moteur 5 possède un arbre de sortie 5' qui entraîne directement le pignon d'entrée ou indirectement par une chaîne mécanique dite « chaîne d'entrée de transmission de puissance 65 ».

Selon l'alternative de la figure 1, l'arbre de sortie 5' met en mouvement une chaîne d'entrée de transmission de puissance 65 reliée au pignon d'entrée 15. Cette chaîne d'entrée de transmission de puissance 65 peut comporter par exemple au moins un arbre et/ou au moins un réducteur de vitesse de rotation et/ou au moins une roue libre 60 et/ou au moins un moyen de renvoi voir un multiplicateur de vitesse non représentés.

Selon l'exemple de la figure 2, une chaîne d'entrée de transmission de puissance 65 comprend un réducteur de vitesse de rotation 66 puis une roue libre 60. La roue libre comporte un organe menant 61 relié au réducteur de vitesse de rotation 66. Cet organe menant 61 a pour fonction de mettre en mouvement un organe mené 62 de la roue libre 60 qui est solidaire en rotation du pignon d'entrée 15. A cet effet, des organes à roulement à billes ou à rouleaux par exemple sont disposés entre l'organe menant 61 et l'organe mené 62.

Le pignon d'entrée 15 peut comprendre des dentures coniques, à savoir des dentures agencées sur un cône.

Par ailleurs et en référence à la figure 1, chaque réducteur d'entrée de vitesse de rotation 14 comporte une roue dite « roue d'entrée 16 ». La roue d'entrée 16 est engrenée par au moins un pignon d'entrée 15. Dès lors, la roue d'entrée 16 peut comprendre des dentures coniques.

Chaque roue d'entrée 16 est en outre mécaniquement reliée à un réducteur principal de vitesse de rotation 13.

Ainsi, chaque roue d'entrée 16 est reliée à un pignon principal 18 du réducteur principal de vitesse de rotation 13 par un arbre de liaison 17. Chaque pignon principal 18 peut prendre la forme d'un pignon conique présentant un diamètre inférieur au diamètre de la roue d'entrée 16 correspondant.

Une roue d'entrée 16 ainsi qu'un arbre de liaison 17 et un pignon principal 18 peuvent former un ensemble dit « ensemble à double pignons » par commodité.

En outre, le réducteur principal de vitesse de rotation 13 comprend une roue de conjugaison dite « roue principale 20 ». Chaque pignon principal 18 est en prise sur la roue principale 20. Cette roue principale 20 peut donc présenter des dentures coniques.

Dès lors, la roue principale 20 entraîne un mât rotor 30 directement ou indirectement par un réducteur secondaire de vitesse de rotation 25. Le mât rotor 30 est solidaire en rotation du rotor principal 2.

Le cas échéant, le réducteur secondaire de vitesse de rotation 25 peut par exemple comporter au moins un étage épicycloïdal de réduction de vitesse de rotation.

Cet étage épicycloïdal de réduction de vitesse de rotation comporte une roue planétaire 26 solidarisée en rotation à la roue principale 20.

Selon la figure 1, un premier arbre 21 solidaire de la roue principale 20 entraîne l'étage épicycloïdal de réduction de vitesse de rotation

Selon la figure 2, un premier arbre 21 solidaire de la roue principale 20 entraîne un deuxième arbre 23 solidaire de la roue planétaire 26 par des cannelures 22.

En outre et en référence à la figure 1, la roue planétaire engrène au moins une roue satellite 27 engrenant une couronne périphérique 28. Chaque roue satellite 27 est de plus portée par un porte-satellites 29. Ce porte-satellites 29 peut être relié mécaniquement au mât rotor 30 selon la figure 1, ou peut encore être relié à un autre étage de réduction de vitesse de rotation.

Par conséquent, chaque moteur 5 met en mouvement un pignon d'entrée, éventuellement via une chaîne d'entrée de transmission de puissance 65. Le mouvement rotatif des divers pignons d'entrée 15 induit une rotation des roues d'entrée 16. La rotation de chaque roue d'entrée 16 provoque la rotation conjointe du pignon principal 18 correspondant, puis de la roue principale 20. Cette roue principale met alors en mouvement le cas échéant le réducteur secondaire de vitesse de rotation 25, ce réducteur secondaire de vitesse de rotation 25 entraînant en rotation le mât rotor 30 du rotor principal 2.

Par ailleurs, le système de transmission de puissance peut être agencé aussi bien sur un hélicoptère que sur un aéronef hybride.

Dès lors, au moins une roue d'entrée 16 est solidaire en rotation d'un moyen de connexion réversible 19. Par exemple, le moyen de connexion réversible peut être fixé à un ensemble à double pignons.

Un moyen de connexion réversible 19 a pour fonction de permettre l'entraînement en rotation d'une première chaîne de transmission de puissance additionnelle 35 reliée à un rotor additionnel. Le rotor additionnel peut être un rotor latéral 4 participant à la propulsion de l'aéronef ou un rotor du contrôle du mouvement en lacet 3 de l'aéronef.

La première chaîne de transmission de puissance additionnelle 35 est de fait un organe optionnel pouvant ne pas être monté sur le système de transmission de puissance 10 .

Par ailleurs, le système de transmission de puissance peut comporter au moins un pignon additionnel 40 optionnel mis en mouvement par la roue principale 20. Ce pignon additionnel 40 peut ainsi comprendre des dentures coniques.

De plus, chaque pignon additionnel 40 peut être prolongé par un arbre de sortie 44 apte à entraîner une deuxième chaîne de transmission de puissance additionnelle. La deuxième chaîne de transmission de puissance additionnelle est reliée à un module d'accessoires 45 et/ou à un rotor annexe. Un tel rotor annexe peut être un rotor de contrôle du mouvement en lacet 3 de l'aéronef ou un rotor latéral 4.

Par ailleurs, le système de transmission de puissance 10 peut comprendre une boîte de transmission de puissance 50 munie d'un carter 51. Ce carter 51 peut comporter une pluralité de sous-ensembles 52, 52' fixés les uns aux autres.

Dès lors, le réducteur principal de vitesse de rotation 13 et chaque réducteur d'entrée de vitesse de rotation 14 sont agencés au sein du carter 51. Le mât rotor saille alors de ce carter 51 en traversant un joint dynamique 54 par exemple.

En outre, un moyen de connexion réversible 19 peut être aussi agencé dans le carter.

Par suite, le carter 51 comprend un moyen d'accès 53 permettant l'accès à ce moyen de connexion réversible 19. Ce moyen d'accès 53 comprend par exemple un bouchon obturant une ouverture du carter. Si nécessaire, le bouchon est enlevé pour permettre à une première chaîne de transmission de puissance additionnelle 35 de s'étendre jusqu'au moyen de connexion réversible 19.

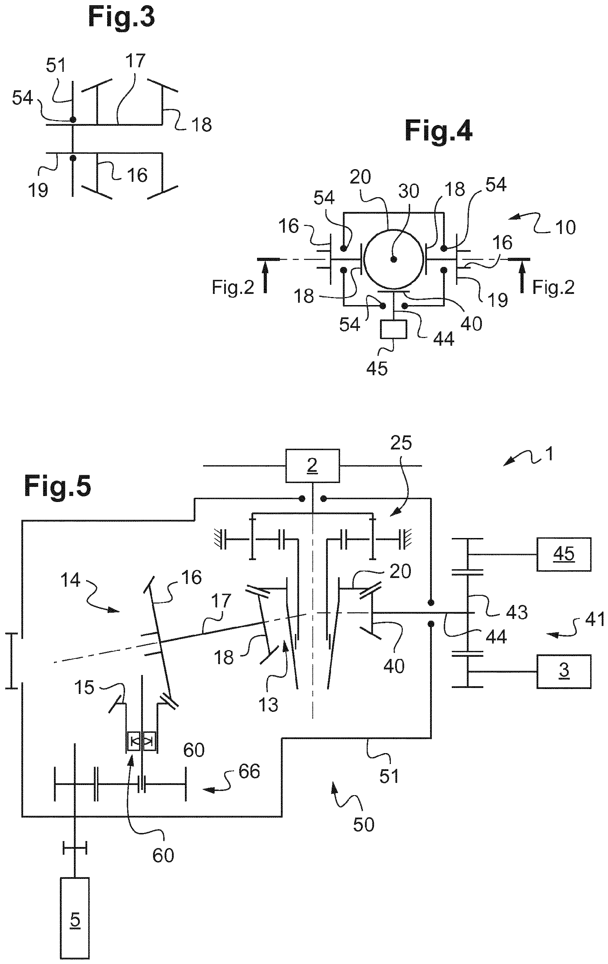

Selon l'alternative de la figure 3, le moyen de connexion réversible 19 peut saillir en dehors du carter 51 en traversant un joint dynamique 54.

Le cas échéant et en référence à la figure 1, au moins un pignon additionnel 40 est aussi agencé au sein du carter 51. Dès lors, l'arbre de sortie 44 solidaire du pignon additionnel saille en dehors du carter 51 au travers d'un joint dynamique pour être apte à entraîner la deuxième chaîne de transmission de puissance additionnelle 41.

Le pignon additionnel 40 étant optionnel, le carter 51 peut comprendre une ouverture obturée de manière réversible, par exemple par une plaque amovible 53'.

Selon un premier mode de réalisation illustré sur les figures 2, 4, 5, 6, le système de transmission de puissance 10 est muni d'au moins un moyen de connexion réversible 19 destiné à entraîner un rotor latéral 4.

Selon une première utilisation du premier mode de réalisation, le système de transmission de puissance 10 est destiné à un hélicoptère.

En référence à la figure 2, le système de transmission de puissance 10 est muni d'au moins un moteur 5. Chaque moteur 5 induit la rotation d'un réducteur d'entrée de vitesse de rotation 14. Les réducteurs d'entrée de vitesse de rotation 14 mettent en mouvement le réducteur principal de vitesse de rotation 13 pour générer la rotation du rotor principal 2.

En outre, le giravion représenté est un hélicoptère. Bien que présents, les moyens de connexion réversibles 19 ne sont donc reliés à aucune première chaîne de transmission de puissance additionnelle.

Par contre, le système de transmission de puissance 10 permet l'entraînement d'un rotor de contrôle du mouvement en lacet 3.

Selon la première variante de la première utilisation du premier mode de réalisation illustrée sur la figure 2, une chaîne mécanique 46 reliée au rotor de contrôle du mouvement en lacet 3 est mise en mouvement par une roue de conjugaison 42. La roue de conjugaison 42 est dès lors engrenée par des pignons mis en mouvement par les moteurs, et par exemple des pignons des chaînes d'entrée de transmission de puissance 65.

Le pignon additionnel 40 peut être démonté pour alléger l'installation, ou peut selon la figure 4 entraîner au moins un module d'accessoires.

Selon une deuxième variante de la première utilisation du premier mode de réalisation illustrée sur la figure 5, un pignon additionnel 40 est engrené par la roue principale 20 pour entraîner une deuxième chaîne de transmission de puissance additionnelle 41.

La deuxième chaîne de transmission de puissance additionnelle 41 est reliée à un rotor de contrôle du mouvement en lacet 3. Par exemple, le pignon additionnel 40 entraîne un arbre de sortie 44 saillant du carter 51. Cet arbre de sortie 44 est solidaire en rotation d'un pignon complémentaire 43 de la deuxième chaîne de transmission de puissance additionnelle 41.

Ce pignon complémentaire peut être relié mécaniquement au rotor de contrôle du mouvement en lacet 3 voire à un module d'accessoires 45.

Il est à noter que la figure 5 présente un seul moteur 5. Toutefois, au moins deux moteurs peuvent être présents.

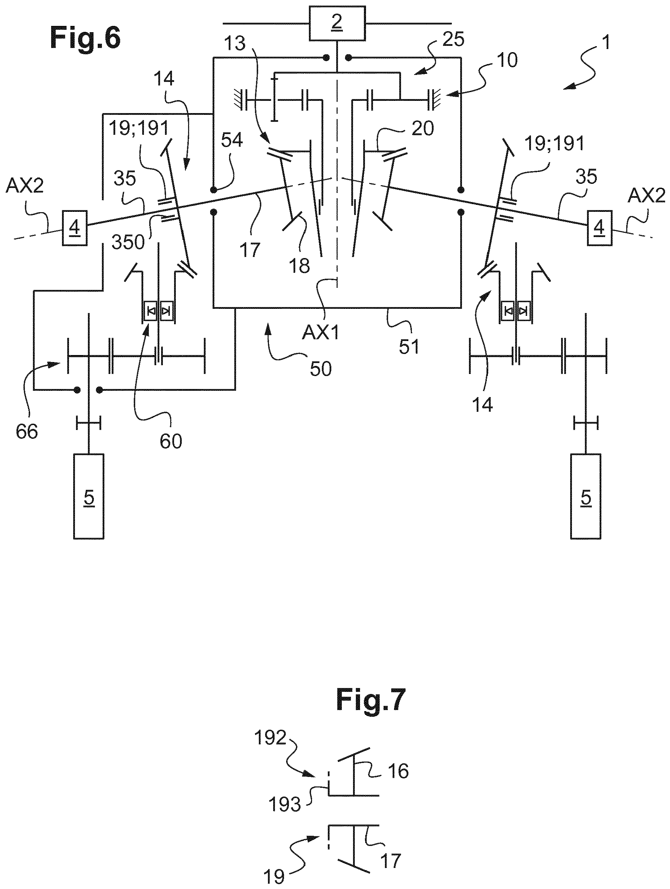

Selon une deuxième utilisation du premier mode de réalisation illustrée sur la figure 6, au moins une première chaîne de transmission de puissance additionnelle 35 est reliée au moyen de connexion réversible 19 correspondant.

Par exemple, le giravion comporte deux moteurs ainsi que deux réducteurs d'entrée de vitesse de rotation 14 et deux chaînes de transmission de puissance latérale 35.

Par suite, la rotation de chaque réducteur d'entrée de vitesse de rotation 14 induit l'entraînement en rotation d'un rotor latéral 4 via une première chaîne de transmission de puissance additionnelle 35.

Chaque première chaîne de transmission de puissance additionnelle 35 a pour fonction d'engendrer la rotation d'un rotor latéral 4 sous l'impulsion du moyen de connexion réversible 19. Ainsi, chaque première chaîne de transmission de puissance additionnelle 35 peut comporter au moins un arbre et/ou des engrenages et/ou des moyens de renvoi et/ou des roues libres et/ou des distributeurs hydrauliques et/ou des pompes hydrauliques ....

Le pignon additionnel 40 peut être démonté pour alléger l'installation, ou peut entraîner au moins un module d'accessoires.

Par ailleurs, pour permettre la connexion d'une première chaîne de transmission de puissance additionnelle 35, le moyen de connexion réversible 19 peut comporter des cannelures 191 solidaires en rotation d'une roue d'entrée.

Dès lors, les cannelures 191 peuvent être fixées à la roue d'entrée correspondante, ou encore à l'arbre de liaison solidaire de cette roue d'entrée, voire à un arbre intermédiaire solidaire en rotation de la roue d'entrée ou de l'arbre de liaison. Autrement dit, le moyen de connexion réversible est fixé à un ensemble à double pignons.

Les cannelures 191 peuvent s'étendre le long d'un axe transversal AX2 de symétrie d'un ensemble à double pignons. Ces cannelures 191 coopèrent avec des cannelures 350 complémentaires d'une première chaîne de transmission de puissance additionnelle 35.

Selon l'alternative de la figure 7, le moyen de connexion réversible 19 comporte des moyens de vissage 192.

Par exemple, les moyens de vissage 192 comprennent une collerette 193 perforée solidaire d'une roue dentée 16 ou de l'arbre de liaison 17. Cette collerette 193 peut être vissée à un élément d'une première chaîne de transmission de puissance additionnelle 35.

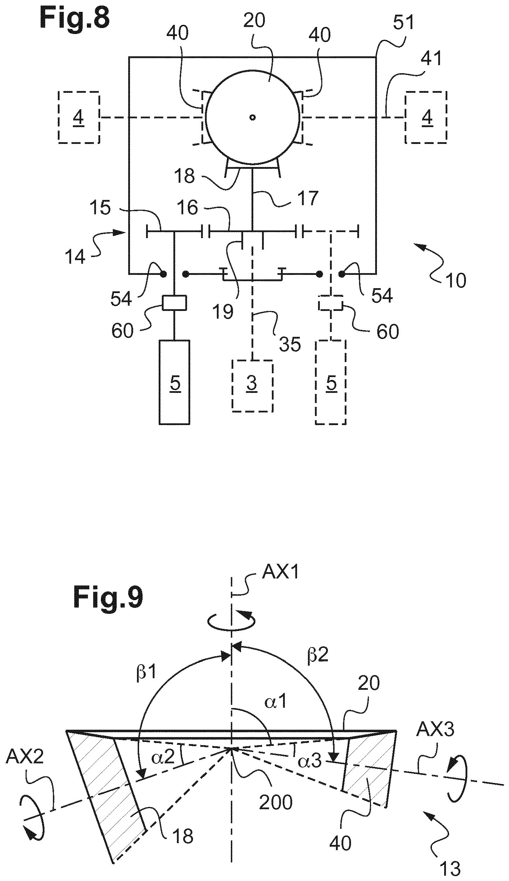

Selon un deuxième mode de réalisation illustré sur la figure 8, le système de transmission de puissance 10 est muni d'au moins un moyen de connexion réversible 19 destiné à entraîner un rotor annexe de type rotor de contrôle du mouvement en lacet 3.

Par suite, le système de transmission de puissance 10 comprend un réducteur d'entrée de vitesse de rotation 14. Ce réducteur d'entrée de vitesse de rotation 14 possède une roue d'entrée 16 et au moins un pignon d'entrée 15.

En particulier et indépendamment du mode de réalisation, la figure 8 illustre la possibilité d'entraîner une roue d'entrée avec une pluralité de moteurs 5. Dès lors, le réducteur d'entrée de vitesse de rotation peut par exemple comporter deux pignons d'entrée engrenant une roue dentée sur un aéronef bimoteur.

Indépendant de cet aspect, lorsque le système de transmission de puissance 10 est agencé sur un hélicoptère, le moyen de connexion réversible 19 est connecté à une première chaîne de transmission de puissance 35 pour entraîner la rotation du rotor de contrôle du mouvement en lacet 3.

Par contre, lorsque le système de transmission de puissance 10 est agencé sur un aéronef hybride, le moyen de connexion réversible 19 est soit inutilisé, soit utilisé pour l'entraînement d'au moins un module d'accessoires.

En outre, le système de transmission de puissance 10 comporte alors un pignon additionnel 40 par rotor latéral 4 à entraîner. Chaque pignon additionnel est en prise sur la roue principale 20 et entraîne un rotor latéral par une deuxième chaîne de transmission de puissance 41.

L'invention présente alors l'avantage de pouvoir entraîner deux rotors latéraux à l'aide éventuellement d'un unique moteur 5 correctement dimensionné. Si deux moteurs sont utilisés, une seule roue de conjugaison peut être agencée, cette roue de conjugaison étant représentée par la roue d'entrée.

Par ailleurs, La figure 9 explicite le procédé de dimensionnement du système de transmission selon l'invention.

Indépendamment de l'utilisation à venir du système de transmission de puissance, la roue principale 20 et chaque pignon principal 18 sont dimensionnés en prenant en considération un pignon additionnel 40 pourtant optionnel.

Chaque arbre de liaison 17 s'étendant selon un axe transversal AX2 faisant office d'axe de symétrie du pignon principal. De même, la roue principale 20 présente un axe en élévation AX1 de symétrie. Enfin, chaque pignon additionnel est à agencer le long d'un axe de rotation AX3.

L'axe en élévation AX1 ainsi que chaque axe transversal AX2 et chaque axe de rotation AX3 sont concourants en un point 200.

En outre, chaque axe transversal AX2 est séparé de l'axe en élévation AX1 par un angle dit « première angulation β1 ». Lorsque plusieurs pignons principaux 18 sont agencés, les pignons principaux 18 présentent la même première angulation β1.

De même, l'axe en élévation AX1 est séparé de l'axe de rotation AX3 par un angle dit « deuxième angulation β2 ». Lorsque plusieurs pignons additionnels 40 sont agencés, les pignons additionnels 40 présentent la même deuxième angulation β2.

En outre, la roue principale 20 présente un nombre de dents dit « premier nombre de dents Z1 », chaque pignon principal 18 présentant un nombre de dents dit « deuxième nombre de dents Z2 », le pignon additionnel 40 présentant un nombre de dents dit « troisième nombre de dents Z3 ».

Les dents de la roue principale 20 sont par exemple agencées sur un cône, chaque dent de la roue principale 20 présentant un angle α1 par rapport à l'axe en élévation AX1. De même, les dents de chaque pignon principal 18 sont par exemple agencées sur un cône, chaque dent d'un pignon principal présentant un angle α2 par rapport à l'axe transversal AX2 autour duquel le pignon principal effectue une rotation. Enfin, les dents de chaque pignon additionnel 40 sont par exemple agencées sur un cône, chaque dent d'un pignon additionnel 40 présentant un angle α3 par rapport à l'axe de rotation AX3 autour duquel le pignon additionnel 40 effectue une rotation.

Durant une étape de détermination, le premier nombre de dents Z1 et le deuxième nombre de dents Z2 sont déterminés en fonction : de la première angulation β1 fixé par le constructeur, et d'une première vitesse de rotation V1 fixée par le constructeur à atteindre par la roue principale 20, et d'une deuxième vitesse de rotation V2 à atteindre par chaque pignon principal 18, et du troisième nombre de dents Z3, et éventuellement d'une troisième vitesse de rotation V3 à atteindre par le pignon additionnel 40, et de la deuxième angulation β2.

Par exemple, un opérateur commence par fixer des consignes à respecter.

Ainsi, un opérateur attribue une première valeur angulaire de consigne β1* à respecter à la première angulation β1. Par exemple, la première valeur angulaire β1* représente une plage de valeurs, telle que 100 degrés plus ou moins 1.5 degrés.

De même, l'opérateur attribue une deuxième valeur angulaire β2* de consigne à respecter à la deuxième angulation β2. Par exemple, la deuxième valeur angulaire β2* représente une unique valeur, éventuellement égale à 96 degrés.

De plus, l'opérateur attribue une première valeur de vitesse de rotation de consigne V1* à respecter par la roue principale 20. Par exemple, la première valeur de vitesse de rotation de consigne V1* est égale à 1200 tours par minute.

De même, l'opérateur attribue une deuxième valeur de vitesse de rotation de consigne V2* à respecter par chaque pignon principal, voire une troisième valeur de vitesse de rotation de consigne V3* à respecter par le pignon additionnel. Par exemple, la deuxième valeur de vitesse de rotation de consigne V2* impose une plage de vitesse, par exemple une vitesse d'au moins 4500 tours par minute, et la troisième valeur de vitesse de rotation de consigne V3* impose une vitesse de 6000 tours par minute plus ou moins 200 tours par minute.

Lorsque les consignes sont établies, l'opérateur teste au moins une combinaison de nombres de dents.

Ainsi, l'opérateur attribue une première valeur de dents au premier nombre de dents Z1, une deuxième valeur de dents au deuxième nombre de dents Z2, une troisième valeur de dents au troisième nombre de dents Z3.

A l'aide de ces données et en appliquant des règles de calcul usuelles, l'opérateur détermine une valeur dite «valeur de calcul résultante » de la première angulation β1 en appliquant la première valeur de dents, la deuxième valeur de dents et la troisième valeur de dents en fonction de la deuxième valeur angulaire β2* de consigne.

Par exemple, l'opérateur fixe le premier nombre de dents à 80, le deuxième nombre de dents à 21 et le troisième nombre de dents à 17. Pour que la deuxième angulation β2 soit égale à 96 degrés avec les nombres de dents choisis, la première angulation β1 doit atteindre une valeur de calcul résultante de 98.9 degrés.

Dès lors, l'opérateur compare cette valeur de calcul résultante avec la première valeur angulaire de consigne.

Cette première valeur angulaire de consigne étant égale selon cet exemple à 100 degrés plus ou moins 1.5 degrés, la valeur de calcul résultante atteinte est acceptable.

De plus, l'opérateur détermine une vitesse de rotation dite « première vitesse de rotation » de chaque pignon principal, voire une vitesse de rotation dite « deuxième vitesse de rotation » de chaque pignon additionnel en fonction de la première valeur de vitesse de rotation de consigne et des première valeur de dents, deuxième valeur de dents et troisième valeur de dents.

Selon l'exemple précédent, la première vitesse de rotation est alors égale à 4571 tours par minute, la deuxième vitesse de rotation étant égale à 5647 tours par minute.

L'opérateur compare alors la première vitesse de rotation à la deuxième valeur de vitesse de rotation de consigne. Eventuellement, l'opérateur compare la deuxième vitesse de rotation et de la troisième valeur de vitesse de rotation de consigne.

Selon l'exemple utilisé, la deuxième valeur de vitesse de rotation de consigne spécifiant une vitesse d'au moins 4500 tours par minute et la troisième valeur de vitesse de rotation de consigne spécifiant une vitesse de 6000 tours par minute plus ou moins 200 tours, la combinaison testée ne s'avère pas satisfaisante.

A l'inverse, d'autres combinaisons sont satisfaisantes, telle qu'une combinaison fixant le premier nombre de dents à 87, le deuxième nombre de dents à 23 et le troisième nombre de dents à 17.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention comme définit dans le jeu de revendications.

## Revendications

1. Système de transmission de puissance (10) destiné à un giravion (1), le système de transmission de puissance (10) étant muni d'au moins un réducteur d'entrée de vitesse de rotation (14) mettant en rotation un réducteur principal de vitesse de rotation (13), ledit réducteur principal de vitesse de rotation (13) étant destiné à être relié mécaniquement à un mât rotor (30) destiné à entraîner en rotation un rotor principal (2) dudit giravion (1), ledit rotor principal (2) participant au moins partiellement à la sustentation du giravion (1), chaque réducteur d'entrée de vitesse de rotation (14) comprenant au moins un pignon d'entrée (15) engrenant une roue d'entrée (16), chaque pignon d'entrée (15) étant destiné à être entraîné par un moteur (5), ledit réducteur principal de vitesse de rotation (13) comprenant un pignon principal (18) par réducteur d'entrée de vitesse de rotation (14), ledit réducteur principal de vitesse de rotation (13) comprenant une roue principale (20) engrenée par chaque pignon principal (18), chaque pignon principal (18) étant relié par un arbre de liaison (17) à ladite roue d'entrée (16), le système de transmission de puissance (10) étant muni d'une première chaîne de transmission de puissance additionnelle (35),
**caractérisé en ce qu'**au moins ladite roue d'entrée (16) est solidaire en rotation autour d'un axe de rotation de la roue d'entrée sur elle-même d'un moyen de connexion réversible (19), le moyen de connexion réversible (19) étant destiné à pouvoir entraîner ladite première chaîne de transmission de puissance additionnelle (35) reliée à un rotor additionnel dudit giravion (1), ladite première chaîne de transmission de puissance additionnelle (35) étant un organe optionnel pouvant ne pas être monté sur ledit système de transmission de puissance (10).

2. Système de transmission de puissance selon la revendication 1,
**caractérisé en ce que** ledit système de transmission de puissance (10) comporte au moins un pignon additionnel (40) en prise sur ladite roue principale (20) pour entraîner une deuxième chaîne de transmission de puissance additionnelle (41) destinée à un rotor annexe du giravion.

3. Système de transmission de puissance selon l'une quelconque des revendications 1 à 2,
**caractérisé en ce que** chaque arbre de liaison (17) s'étendant selon un axe transversal (AX2) de symétrie, ladite roue principale (20) présentant un axe en élévation (AX1) de symétrie, ledit axe transversal (AX2) présentant une première angulation (β1) avec ledit axe en élévation (AX1), ladite roue principale (20) présentant un premier nombre de dents (Z1), chaque pignon principal (18) présentant un deuxième nombre de dents (Z2), le premier nombre de dents (Z1) et le deuxième nombre de dents (Z2) sont fonction :
- de ladite première angulation (β1),
- d'une première vitesse de rotation (V1) à atteindre par ladite roue principale (20),
- d'une deuxième vitesse de rotation (V2) à atteindre par chaque pignon principal (18),
- d'un troisième nombre de dents (Z3) d'un pignon additionnel (40) susceptible d'être en prise sur ladite roue principale (20) pour entraîner une deuxième chaîne de transmission de puissance additionnelle (41) destinée à un rotor de contrôle du mouvement du giravion, ledit pignon additionnel (40) étant un organe optionnel pouvant ne pas être monté sur ledit système de transmission de puissance (10),
- d'une deuxième angulation (β2) séparant ledit axe en élévation (AX1) d'un axe de rotation (AX3) dudit pignon additionnel (40).

4. Système de transmission de puissance selon l'une quelconque des revendications 1 à 3,
**caractérisé en ce que** ledit système de transmission de puissance comporte un réducteur secondaire de vitesse de rotation (25) interposé entre ladite roue principale et ledit mât rotor.

5. Système de transmission de puissance selon l'une quelconque des revendications 1 à 4,
**caractérisé en ce que** ledit système de transmission de puissance (10) comprenant une boîte de transmission de puissance (50) munie d'un carter (51), ledit réducteur d'entrée de vitesse de rotation (14) et ledit réducteur principal de vitesse de rotation (13) sont agencés dans ledit carter (51).

6. Système de transmission de puissance selon la revendication 5,
**caractérisé en ce que** ledit système de transmission de puissance (10) comportant un pignon additionnel (40) en prise sur ladite roue principale (20) pour entraîner une deuxième chaîne de transmission de puissance additionnelle (41) destinée à un rotor de contrôle du mouvement du giravion, ledit pignon additionnel (40) est agencé dans ledit carter (51).

7. Système de transmission de puissance selon la revendication 6,
**caractérisé en ce que** ledit pignon additionnel (40) est solidaire d'un arbre de sortie (44) saillant en dehors du carter (51) pour être apte à entraîner ladite chaîne de transmission de puissance additionnelle (41).

8. Système de transmission de puissance selon la revendication 7,
**caractérisé en ce que** ledit système de transmission de puissance (10) comporte un module d'accessoires (45) relié mécaniquement audit arbre de sortie (44).

9. Système de transmission de puissance selon l'une quelconque des revendications 1 à 8,
**caractérisé en ce que** ledit système de transmission de puissance (10) comporte au moins une chaîne d'entrée de transmission de puissance (65) reliée à un pignon d'entrée (15), ladite chaîne d'entrée de transmission de puissance (65) étant destinée à être interposée entre le pignon d'entrée et un moteur (5), ladite chaîne d'entrée de transmission de puissance comprenant au moins un organe à choisir dans une liste comprenant une roue libre (60), un réducteur de vitesse de rotation (66), un multiplicateur de vitesse de rotation.

10. Système de transmission de puissance selon l'une quelconque des revendications 1 à 9,
**caractérisé en ce que** ledit moyen de connexion réversible (19) d'un réducteur d'entrée de vitesse de rotation (14) comporte des cannelures (191) solidaires en rotation d'une roue d'entrée (16)

11. Système de transmission de puissance selon l'une quelconque des revendications 1 à 9,
**caractérisé en ce que** ledit moyen de connexion réversible (19) comporte des moyens de vissage (192) aptes à solidariser une première chaîne de transmission de puissance (35) à une roue d'entrée (16).

12. Système de transmission de puissance selon l'une quelconque des revendications 1 à 11,
**caractérisé en ce que** chaque première chaîne de transmission de puissance additionnelle (35) est destinée à être reliée à un rotor additionnel prenant la forme d'un rotor latéral (4) participant au moins partiellement à la propulsion du giravion.

13. Système de transmission de puissance selon la revendication 12,
**caractérisé en ce que**, ledit système de transmission de puissance (10) comportant un pignon additionnel (40) optionnel en prise sur ladite roue principale (20) pour entraîner une deuxième chaîne de transmission de puissance additionnelle (41), ladite deuxième chaîne de transmission de puissance additionnelle (41) est destinée à être reliée à un rotor annexe prenant la forme d'un rotor de contrôle du mouvement en lacet (3) du giravion.

14. Système de transmission de puissance selon l'une quelconque des revendications 1 à 11,
**caractérisé en ce que** chaque première chaîne de transmission additionnelle (35) est destinée à être reliée à un rotor additionnel prenant la forme d'un rotor de contrôle du mouvement en lacet (3) du giravion.

15. Système de transmission de puissance selon la revendication 12,
**caractérisé en ce que**, ledit système de transmission de puissance (10) comportant au moins un pignon additionnel (40) optionnel en prise sur ladite roue principale (20) pour entraîner une deuxième chaîne de transmission de puissance additionnelle (41), ladite deuxième chaîne de transmission additionnelle (41) est destinée à être reliée à un rotor annexe prenant la forme d'un rotor latéral (4) participant au moins partiellement à la propulsion du giravion.

16. Système de transmission de puissance selon l'une quelconque des revendications 1 à 15,
**caractérisé en ce qu'**au moins un ensemble à double pignons comprend un dit pignon principal (18) relié par un dit arbre de liaison (17) à une dite roue d'entrée (16), ledit ensemble à double pignons étant directement solidaire en rotation, autour d'un axe de rotation de la roue d'entrée sur elle-même, d'un moyen de connexion réversible (19).

17. Giravion (1) muni d'un rotor dit « rotor principal (2) » participant au moins partiellement à la sustentation du giravion (1), ledit giravion (1) comprenant au moins deux moteurs (5) pour mettre en mouvement ledit rotor principal (2),
**caractérisé en ce que** ledit giravion (1) comporte un système de transmission de puissance (10) selon l'une quelconque des revendications 1 à 16.

18. Procédé pour dimensionner un système de transmission de puissance (10) selon l'une quelconque des revendications 1 à 16,
**caractérisé en ce que** chaque arbre de liaison (17) s'étendant selon un axe transversal (AX2) de symétrie, ladite roue principale (20) présentant un axe en élévation (AX1) de symétrie, ledit axe transversal (AX2) présentant une première angulation (β1) avec ledit axe en élévation (AX1), ladite roue principale (20) présentant un premier nombre de dents (Z1), chaque pignon principal (18) présentant un deuxième nombre de dents (Z2), ledit procédé comporte une étape de détermination durant laquelle le premier nombre de dents (Z1) et le deuxième nombre de dents (Z2) sont déterminés en fonction :
- de ladite première angulation (β1),
- d'une première vitesse de rotation (V1) à atteindre par ladite roue principale (20),
- d'une deuxième vitesse de rotation (V2) à atteindre par chaque pignon principal (18),
- d'un troisième nombre de dents (Z3) pour un pignon additionnel (40) susceptible d'être en prise sur ladite roue principale (20) pour entraîner une chaîne de transmission de puissance additionnelle (41) destinée à un rotor de contrôle du mouvement en lacet (3) d'un hélicoptère, ledit pignon additionnel (40) étant un organe optionnel pouvant ne pas être monté sur ledit système de transmission de puissance (10),
- d'une deuxième angulation (β2) séparant ledit axe en élévation (AX1) d'un axe de rotation (AX3) dudit pignon additionnel (40).

19. Procédé selon la revendication 18,
**caractérisé en ce que** ce procédé comporte les étapes suivantes :
- attribution d'une première valeur angulaire de consigne à respecter par ladite première angulation, et d'une deuxième valeur angulaire de consigne à respecter par ladite deuxième angulation,
- attribution d'une première valeur de vitesse de rotation de consigne à respecter à ladite roue principale, et d'une deuxième valeur de vitesse de rotation de consigne à respecter pour chaque pignon principal (18),
- attribution d'une première valeur de dents au premier nombre de dents,
- attribution d'une deuxième valeur de dents au deuxième nombre de dents,
- attribution d'une troisième valeur de dents au troisième nombre de dents,
- détermination d'une valeur dite «valeur de calcul résultante » en appliquant la première valeur de dents, la deuxième valeur de dents et la troisième valeur de dents en fonction de la deuxième valeur angulaire de consigne,
- comparaison de ladite valeur de calcul résultante avec la première valeur angulaire de consigne,
- détermination d'une première vitesse de rotation de chaque pignon principal (18) en fonction de la première valeur de vitesse de rotation de consigne et desdites première valeur de dents, deuxième valeur de dents et troisième valeur de dents,
- comparaison de ladite première vitesse de rotation et de la deuxième valeur de vitesse de rotation de consigne.

## Patentansprüche

1. Antriebssystem (10) für ein Drehflügelflugzeug (1), wobei das Antriebssystem (10) mit mindestens einem Eingangsuntersetzungsgetriebe (14) versehen ist, das ein Hauptuntersetzungsgetriebe (13) drehantreibt, wobei das Hauptuntersetzungsgetriebe (13) vorgesehen ist, um mechanisch mit einem Rotormast (30) verbunden zu sein, der dazu bestimmt ist, einen Hauptrotor (2) des Drehflüglers (1) drehanzutreiben, und der Hauptrotor (2) zumindest teilweise am Schweben des Drehflüglers (1) beteiligt ist, wobei jedes Eingangsuntersetzungsgetriebe (14) mindestens ein Eingangsritzel (15) umfasst, das in ein Eingangsrad (16) eingreift, wobei jedes Eingangsritzel (15) vorgesehen ist, um von einem Motor (5) angetrieben zu werden, wobei das Hauptuntersetzungsgetriebe (13) ein Hauptritzel (18) pro Eingangsuntersetzungsgetriebe (14) umfasst, das Hauptuntersetzungsgetriebe (13) ein Hauptrad (20) umfasst, das mit jedem Hauptritzel (18) in Eingriff steht, jedes Hauptritzel (18) durch eine Verbindungswelle (17) mit dem Eingangsrad (16) verbunden ist, und das Antriebssystem (10) mit einem ersten Zusatz-Antriebsstrang (35) versehen ist,
**dadurch gekennzeichnet, dass** mindestens das Eingangsrad (16) um eine Drehachse des Eingangsrades um sich selbst drehfest mit einem reversiblen Verbindungsmittel (19) verbunden ist, das reversible Verbindungsmittel (19) vorgesehen ist, um den ersten Zusatz-Antriebsstrang (35) antreiben zu können, der mit einem zusätzlichen Rotor des Drehflügelflugzeugs (1) verbunden ist, wobei der erste Zusatz-Antriebsstrang (35) ein optionales Element ist, das nicht an dem Antriebssystem (10) montiert sein muss.

2. Antriebssystem nach Anspruch 1,
**dadurch gekennzeichnet, dass** das Antriebssystem (10) mindestens ein zusätzliches Ritzel (40) umfasst, das an dem Hauptrad (20) in Eingriff ist, um einen zweiten Zusatz-Antriebsstrang (41) für einen Hilfsrotor des Drehflügelflugzeugs anzutreiben.

3. Antriebssystem nach einem der Ansprüche 1 bis 2,
**dadurch gekennzeichnet, dass** jede Verbindungswelle (17) sich entlang einer transversalen Symmetrieachse (AX2) erstreckt, wobei das Hauptrad (20) eine vertikale Symmetrieachse (AX1) aufweist, die transversale Achse (AX2) eine erste Abwinkelung (β1) mit der vertikalen Achse (AX1) aufweist, das Hauptrad (20) eine erste Anzahl von Zähnen (Z1) aufweist, jedes Hauptritzel (18) eine zweite Anzahl von Zähnen (22) aufweist, und die erste Anzahl von Zähnen (Z1) und die zweite Anzahl von Zähnen (Z2) abhängig sind von:
- der ersten Abwinkelung (β1),
- einer von dem Hauptrad (20) zu erreichenden ersten Drehzahl (V1),
- einer von jedem Hauptritzel (18) zu erreichenden zweiten Drehzahl (V2),
- einer dritten Anzahl von Zähnen (Z3) eines zusätzlichen Ritzels (40), das in das Hauptrad (20) eingreifen kann, um einen zweiten Zusatz-Antriebsstrang (41) für einen Rotor zum Steuern der Bewegung des Drehflügelflugzeugs anzutreiben, wobei das zusätzliche Ritzel (40) ein optionales Element ist, das nicht an dem Antriebssystem (10) montiert sein muss,
- einer zweiten Abwinkelung (β2), die die vertikale Achse (AX1) von einer Drehachse (AX3) des zusätzlichen Ritzels (40) trennt.

4. Antriebssystem nach einem der Ansprüche 1 bis 3,
**dadurch gekennzeichnet, dass** das Antriebssystem ein Sekundäruntersetzungsgetriebe (25) umfasst, das zwischen dem Hauptrad und dem Rotormast angeordnet ist.

5. Antriebssystem nach einem der Ansprüche 1 bis 4,
**dadurch gekennzeichnet, dass** das Antriebssystem (10) ein Getriebe (50) umfasst, das mit einem Gehäuse (51) versehen ist, und dass das Eingangsuntersetzungsgetriebe (14) und das Hauptuntersetzungsgetriebe (13) in dem Gehäuse (51) angeordnet sind.

6. Antriebssystem nach Anspruch 5,
**dadurch gekennzeichnet, dass** das Antriebssystem (10) ein zusätzliches Ritzel (40) aufweist, das mit dem Hauptrad (20) in Eingriff steht, um einen zweiten Zusatz-Antriebsstrang (41) für einen Rotor zum Steuern der Bewegung des Drehflügelflugzeugs anzutreiben, und dass das zusätzliche Ritzel (40) in dem Gehäuse (51) angeordnet ist.

7. Antriebssystem nach Anspruch 6,
**dadurch gekennzeichnet, dass** das zusätzliche Ritzel (40) fest mit einer Abtriebswelle (44) verbunden ist, die aus dem Gehäuse (51) herausragt, um den Zusatz-Antriebsstrang (41) antreiben zu können.

8. Antriebssystem nach Anspruch 7,
**dadurch gekennzeichnet, dass** das Kraftübertragungssystem (10) ein Zubehörmodul (45) aufweist, das mechanisch mit der Abtriebswelle (44) verbunden ist.

9. Antriebssystem nach einem der Ansprüche 1 bis 8,
**dadurch gekennzeichnet, dass** das Antriebssystem (10) mindestens einen Eingangs-Antriebsstrang (65) umfasst, der mit einem Eingangsritzel (15) verbunden ist, wobei der Eingangs-Antriebsstrang (65) vorgesehen ist, um zwischen dem Eingangsritzel und einem Motor (5) angeordnet zu sein, der Eingangs-Antriebsstrang mindestens ein Element umfasst, das aus einer Liste ausgewählt werden kann, die einen Freilauf (60), ein Untersetzungsgetriebe (66) und ein Übersetzungsgetriebe umfasst.

10. Antriebssystem nach einem der Ansprüche 1 bis 9,
**dadurch gekennzeichnet, dass** das reversible Verbindungsmittel (19) eines Eingangsuntersetzungsgetriebes (14) Verzahnungen (191) aufweist, die drehfest mit einem Eingangsrad (16) verbunden sind.

11. Antriebssystem nach einem der Ansprüche 1 bis 9,
**dadurch gekennzeichnet, dass** das reversible Verbindungsmittel (19) Schraubmittel (192) umfasst, die geeignet sind, einen erste Antriebsstrang (35) fest mit einem Eingangsrad (16) zu verbinden.

12. Antriebssystem nach einem der Ansprüche 1 bis 11,
**dadurch gekennzeichnet, dass** jeder erste Zusatz-Antriebsstrang (35) vorgesehen ist, um mit einem zusätzlichen Rotor in Form eines Seitenrotors (4) verbunden zu sein, der zumindest teilweise am Antrieb des Drehflügelflugzeugs beteiligt ist.

13. Antriebssystem nach Anspruch 12,
**dadurch gekennzeichnet, dass** das Antriebssystem (10) ein optionales Zusatz-Ritzel (40) aufweist, das an dem Hauptrad (20) angreift, um einen zweiten Zusatz-Antriebsstrang (41) anzutreiben, wobei der zweite Zusatz-Antriebsstrang (41) vorgesehen ist, um mit einem Hilfsrotor in Form eines Rotors zum Steuern der Gierbewegung (3) des Drehflügelflugzeugs verbunden zu sein.

14. Antriebssystem nach einem der Ansprüche 1 bis 11,
**dadurch gekennzeichnet, dass** jeder erste Zusatz-Antriebsstrang (35) vorgesehen ist, mit einem zusätzlichen Rotor in Form eines Rotors zum Steuern der Gierbewegung (3) des Drehflügelflugzeugs verbunden zu sein.

15. Antriebssystem nach Anspruch 12,
**dadurch gekennzeichnet, dass** das Antriebssystem (10) mindestens ein optionales Zusatz-Ritzel (40) aufweist, das an dem Hauptrad (20) angreift, um einen zweiten Zusatz-Antriebsstrang (41) anzutreiben, und der zweite Zusatz-Antriebsstrang (41) vorgesehen ist, um mit einem Hilfsrotor in Form eines Seitenrotors (4) verbunden zu sein, der zumindest teilweise am Antrieb des Drehflügelflugzeugs beteiligt ist.

16. Antriebssystem nach einem der Ansprüche 1 bis 15,
**dadurch gekennzeichnet, dass** mindestens eine Doppelritzelanordnung ein besagtes Hauptritzel (18) umfasst, das durch eine Verbindungswelle (17) mit einem Eingangsrad (16) verbunden ist, wobei die Doppelritzelanordnung direkt um eine Drehachse des Eingangsrades um sich selbst drehfest mit einem reversiblen Verbindungsmittel (19) verbunden ist.

17. Drehflügelflugzeug (1) mit einem als "Hauptrotor (2)" bezeichneten Rotor, der zumindest teilweise am Schweben des Drehflügelflugzeugs (1) beteiligt ist, wobei das Drehflügelflugzeug (1) mindestens zwei Motoren (5) zum Bewegen des Hauptrotors (2) umfasst,
**dadurch gekennzeichnet, dass** das Drehflügelflugzeug (1) ein Antriebssystem (10) nach einem der Ansprüche 1 bis 16 aufweist.

18. Verfahren zum Dimensionieren eines Antriebssystems (10) nach einem der Ansprüche 1 bis 16,
**dadurch gekennzeichnet, dass** jede Verbindungswelle (17) sich entlang einer transversalen Symmetrieachse (AX2) erstreckt und das Hauptrad (20) eine vertikale Symmetrieachse (AX1) aufweist, wobei die transversale Achse (AX2) eine erste Abwinkelung (B1) mit der vertikalen Achse (AX1) bildet, das Hauptrad (20) eine erste Anzahl von Zähnen (Z1) aufweist, jedes Hauptritzel (18) eine zweite Anzahl von Zähnen (Z2) aufweist, das Verfahren einen Bestimmungsschritt umfasst, bei dem die erste Anzahl von Zähnen (Z1) und die zweite Anzahl von Zähnen (22) bestimmt werden anhand:
- der ersten Abwinkelung (B1),
- einer von dem Hauptrad (20) zu erreichenden ersten Drehzahl (V1),
- einer von jedem Hauptritzel (18) zu erreichenden zweiten Drehzahl (V2),
- einer dritten Anzahl von Zähnen (Z3) eines zusätzlichen Ritzels (40), das in das Hauptrad (20) eingreifen kann, um einen Zusatz-Antriebsstrang (41) für einen Rotor zum Steuern der Gierbewegung eines Hubschraubers anzutreiben,
wobei das zusätzliche Ritzel (40) ein optionales Element ist, das nicht an dem Antriebssystem (10) montiert sein muss,
- einer zweiten Abwinkelung (β2), die die vertikale Achse (AX1) von einer Drehachse (AX3) des zusätzlichen Ritzels (40) trennt.

19. Verfahren nach Anspruch 18,
**dadurch gekennzeichnet, dass** das Verfahren die folgenden Schritte beinhaltet:
- Zuweisen eines von der ersten Abwinkelung einzuhaltenden ersten Winkelsollwerts und eines von der zweiten Abwinkelung einzuhaltenden zweiten Winkelsollwerts,
- Zuweisen eines von dem Hauptrad einzuhaltenden ersten Drehzahlsollwerts und eines von jedem Hauptritzel (18) einzuhaltenden zweiten Drehzahlsollwerts,
- Zuweisen eines ersten Zahnwerts an die erste Zähneanzahl,
- Zuweisen eines zweiten Zahnwerts an die zweite Zähneanzahl,
- Zuweisen eines dritten Zahnwertes an die dritte Zähneanzahl,
- Bestimmen eines sogenannten "resultierenden Berechnungswertes" durch Anwenden des ersten Zahnwertes, des zweiten Zahnwertes und des dritten Zahnwertes in Abhängigkeit vom zweiten Winkelsollwert,
- Vergleichen des resultierenden Berechnungswertes mit dem ersten Winkelsollwert,
- Bestimmen einer ersten Drehzahl jedes Hauptritzels (18) als Funktion des Drehzahlsollwerts und des ersten Zahnwerts, des zweiten Zahnwerts und des dritten Zahnwerts,
- Vergleichen der ersten Drehzahl mit dem zweiten Solldrehzahlwert.

## Claims

1. Power transmission system (10) intended for a rotorcraft (1), the power transmission system (10) being provided with at least one input rotational speed reducer (14) rotating a main rotational speed reducer (13), said main rotational speed reducer (13) being designed to be mechanically connected to a rotor mast (30) designed to rotate a main rotor (2) of said rotorcraft (1), said main rotor (2) at least partially contributing to the lift of the rotorcraft (1), each input rotational speed reducer (14) comprising at least one input gear (15) meshing with an input wheel (16), each input gear (15) being designed to be driven by an engine (5), said main rotational speed reducer (13) comprising one main gear (18) per input rotational speed reducer (14), said main rotational speed reducer (13) comprising a main wheel (20) meshed by each main gear (18), each main gear (18) being connected by a connecting shaft (17) to said input wheel (16), the power transmission system (10) being provided with a first additional power transmission chain (35), **characterised in that** at least said input wheel (16) is constrained to rotate, about an axis of rotation of the input wheel, with a reversible connection means (19), the reversible connection means (19) being designed to be able to drive said first additional power transmission chain (35) connected to an additional rotor of said rotorcraft (1), said first additional power transmission chain (35) being an optional member that cannot be mounted onto said power transmission system (10).

2. Power transmission system according to claim 1, **characterised in that** said power transmission system (10) comprises at least one additional gear (40) engaged on said main wheel (20) in order to drive a second additional power transmission chain (41) intended for an auxiliary rotor of the rotorcraft.

3. Power transmission system according to either claim 1 or claim 2, **characterised in that**, each connecting shaft (17) extending along a transverse axis (AX2) of symmetry, said main wheel (20) having a vertical axis (AX1) of symmetry, said transverse axis (AX2) having a first angulation (β1) with respect to said vertical axis (AX1), said main wheel (20) having a first number of teeth (Z1), each main gear (18) having a second number of teeth (Z2), the first number of teeth (Z1) and the second number of teeth (Z2) are dependent on:
- said first angulation (β1),
- a first rotational speed (V1) to be reached by said main wheel (20),
- a second rotational speed (V2) to be reached by each main gear (18),
- a third number of teeth (Z3) of an additional gear (40) capable of being engaged on said main wheel (20) in order to drive a second additional power transmission chain (41) intended for a rotor for controlling the movement of the rotorcraft, said additional gear (40) being an optional member that cannot be mounted onto said power transmission system (10),
- a second angulation (β2) separating said vertical axis (AX1) and an axis (AX3) of rotation of said additional gear (40).

4. Power transmission system according to any of claims 1 to 3, **characterised in that** said power transmission system comprises a secondary rotational speed reducer (25) positioned between said main wheel and said rotor mast.

5. Power transmission system according to any of claims 1 to 4, **characterised in that**, said power transmission system (10) comprising a power transmission gearbox (50) provided with a housing (51), said input rotational speed reducer (14) and said main rotational speed reducer (13) are arranged in said housing (51).

6. Power transmission system according to claim 5, **characterised in that**, said power transmission system (10) comprising an additional gear (40) engaged on said main wheel (20) in order to drive a second additional power transmission chain (41) intended for a rotor for controlling the movement of the rotorcraft, said additional gear (40) is arranged in said housing (51).

7. Power transmission system according to claim 6, **characterised in that** said additional gear (40) is rigidly connected to an output shaft (44) projecting outside the housing (51) in order to be able to drive said additional power transmission chain (41).

8. Power transmission system according to claim 7, **characterised in that** said power transmission system (10) comprises an accessory module (45) mechanically connected to said output shaft (44).

9. Power transmission system according to any of claims 1 to 8, **characterised in that** said power transmission system (10) comprises at least one power transmission input chain (65) connected to an input gear (15), said power transmission input chain (65) being designed to be positioned between the input gear and an engine (5), said power transmission input chain comprising at least one member to be selected from a list comprising a free wheel (60), a rotational speed reducer (66), and a rotational speed multiplier.

10. Power transmission system according to any of claims 1 to 9, **characterised in that** said reversible connection means (19) of an input rotational speed reducer (14) comprises splines (191) constrained to rotate with an input wheel (16).

11. Power transmission system according to any of claims 1 to 9, **characterised in that** said reversible connection means (19) comprises screwing means (192) capable of rigidly connecting a first power transmission chain (35) to an input wheel (16).

12. Power transmission system according to any of claims 1 to 11, **characterised in that** each first additional power transmission chain (35) is designed to be connected to an additional rotor in the form of a side rotor (4) at least partially contributing to the propulsion of the rotorcraft.

13. Power transmission system according to claim 12, **characterised in that**, said power transmission system (10) comprising an optional additional gear (40) engaged on said main wheel (20) in order to drive a second additional power transmission chain (41), said second additional power transmission chain (41) is designed to be connected to an auxiliary rotor in the form of a rotor for controlling the yaw movement (3) of the rotorcraft.

14. Power transmission system according to any of claims 1 to 11, **characterised in that** each first additional transmission chain (35) is designed to be connected to an additional rotor in the form of a rotor for controlling the yaw movement (3) of the rotorcraft.

15. Power transmission system according to claim 12, **characterised in that**, said power transmission system (10) comprising at least one optional additional gear (40) engaged on said main wheel (20) in order to drive a second additional power transmission chain (41), said second additional transmission chain (41) is designed to be connected to an auxiliary rotor in the form of a side rotor (4) at least partially contributing to the propulsion of the rotorcraft.

16. Power transmission system according to any of claims 1 to 15, **characterised in that** at least one double gear assembly comprises said main gear (18) connected by said connecting shaft (17) to said input wheel (16), said double gear assembly being directly constrained to rotate, about an axis of rotation of the input wheel, with a reversible connection means (19).

17. Rotorcraft (1) provided with a rotor, referred to as the "main rotor (2)", which contributes at least partially to the lift of the rotorcraft (1), said rotorcraft (1) comprising at least two engines (5) in order to move said main rotor (2), **characterised in that** said rotorcraft (1) comprises a power transmission system (10) according to any of claims 1 to 16.

18. Method for sizing a power transmission system (10) according to any of claims 1 to 16, **characterised in that**, each connecting shaft (17) extending along a transverse axis (AX2) of symmetry, said main wheel (20) having a vertical axis (AX1) of symmetry, said transverse axis (AX2) having a first angulation (β1) with respect to said vertical axis (AX1), said main wheel (20) having a first number of teeth (Z1), each main gear (18) having a second number of teeth (Z2), said method comprises a determining step during which the first number of teeth (Z1) and the second number of teeth (Z2) are determined on the basis of:
- said first angulation (β1),
- a first rotational speed (V1) to be reached by said main wheel (20),
- a second rotational speed (V2) to be reached by each main gear (18),
- a third number of teeth (Z3) for an additional gear (40) capable of being engaged on said main wheel (20) in order to drive an additional power transmission chain (41) intended for a rotor for controlling the yaw movement (3) of a helicopter, said additional gear (40) being an optional member that cannot be mounted onto said power transmission system (10),
- a second angulation (β2) separating said vertical axis (AX1) and an axis (AX3) of rotation of said additional gear (40).

19. Method according to claim 18, **characterised in that** the method comprises the following steps:
- assigning a first angular set value to be respected by said first angulation, and a second angular set value to be respected by said second angulation,
- assigning a first rotational speed set value to be respected by said main wheel, and a second rotational speed set value to be respected by each main gear (18),
- assigning a first tooth value to the first number of teeth,
- assigning a second tooth value to the second number of teeth,
- assigning a third tooth value to the third number of teeth,
- determining a value, referred to as the "resulting calculation value", by applying the first tooth value, the second tooth value and the third tooth value on the basis of the second angular set value,
- comparing said resulting calculation value with the first angular set value,
- determining a first rotational speed of each main gear (18) on the basis of the first rotational speed set value and said first tooth value, second tooth value and third tooth value,
- comparing said first rotational speed with the second rotational speed set value.
